# EUROPEAN PATENT APPLICATION

(11) **EP 4 046 779 A1**
(43) Date of publication of application: **24.08.2022**
(21) Application number: 22382036.6
(22) Date of filing: 20.01.2022
(51) Int. Cl.: B29C 64/329, B29C 64/336, B01J 8/00, B01J 19/24, B22F 10/00, B29B 7/60

(54) **HOMOGENEOUS MATERIAL MIXING DEVICE, MATERIAL EXTRUSION PRINTER AND OPERATING METHOD FOR A HOMOGENEOUS MATERIAL MIXING DEVICE**

(30) Priority: 17.02.2021 ES 202100026
(71) Applicant: Universidad de Las Palmas de Gran Canaria, 35001 Las Palmas de Gran Canaria (ES)
(72) Inventor: GARCIA MONTAGUT, Carlos Joshua, 35015 LAS PALMAS DE GRAN CANARIA (ES); MONZON VERONA, Mario Domingo, 35011 LAS PALMAS DE GRAN CANARIA (ES); PAZ HERNANDEZ, Ruben, 35019 LAS PALMAS DE GRAN CANARIA (ES)
(74) Representative: Igartua, Ismael

(57) **Abstract**

Homogeneous material mixing device adapted for an extrusion printer comprising a cyclone (10), a pipe (21) which transports to the cyclone (10) gas or the mixture of gas with particles of the first material, at least a second pipe (22) which transports gas or a mixture of the gas with particles of a second material to the cyclone (10), and regulation means (4) configured to continuously regulate the gas flow rate circulating through both pipes (21,22) ensuring a constant total inflow rate in the cyclone (10) through each pipe (21,22) with a predefined amount of particles of the corresponding material, the mixing of both materials and the separation of the gas from the mixture, or the separation of the gas from the first material or second material being carried out in the cyclone (10). Operating method for the device.

## Description

### TECHNICAL FIELD

The present invention relates to a homogeneous material mixing device, with a material extrusion printer comprising the homogeneous mixing device, and an operating method for a homogeneous material mixing device.

### PRIOR ART

Various cyclone separators are known in the state of the art, namely in the chemical industry, where it is a device widely used to clean foreign particles out of a contaminated gas. Their cleaning function takes place when the gas contaminated with particles enters the cyclone, where a vortex is generated, projecting the particles towards the wall of the cyclone due to centrifugal force. As this gas jet is projected around, it loses energy, so the particles gradually fall to the bottom of the cyclone due to gravity. A second concentric vortex is generated with the clean gas, but it has a smaller diameter and escapes through the upper portion of the cyclone.

3D printers based on material extrusion are also known in the state of the art. Said printers use a filament of the chosen material to manufacture the part, where said filament is melted and deposited gradually on the base, shaping the part layer by layer. Sometimes, instead of a wire, a screw extrusion device allowing pellets or small balls of plastic material to be worked with instead of filaments is used. In any case, when manufacturing the part, previously defined materials are used as a starting material, which makes it necessary to generate a boundary between materials when a multi-material part is being manufactured.

Document WO2019022747A1 discloses a three-dimensional printing system having a feed pipe receiving particles of a building material, an air pressure generator configured to generating an airflow inside the feed pipe capable of moving the material particles through the feed pipe, and a cyclone separator receiving the airflow and the material particles from the feed pipe and separating the particles from the airflow. The cyclone separator comprises a chamber wall, a material particle discharge opening, and a tapered wall connecting the chamber wall with the opening, the ratio between the diameters of the chamber and the opening being comprised in a specific range.

Utility model CN209007937U discloses a forced powder feeding device for an extruder comprising a cyclone separator, a forced feeding unit and an extrusion hopper, wherein the outlet of the cyclone separator and the forced feeding unit are connected. The forced feeding unit comprises an extruding device with an obliquely arranged elongated body inside of which an extruding screw is housed. The extruding device includes a first seat between the outlet of the separator and the elongated body and a second seat between the extrusion hopper and the elongated body, the elongated body and the seats being detachable.

Lastly, document EP3501793A1 describes an ambient-temperature pre-mixing and feeding assembly providing at least one or more materials in granule, pellet or powder form for transport to a printhead of a 3D printer. The feeding assembly comprises containers housing the respective materials, a hopper where the pre-mixing of materials is carried out, a pre-mixing dosing valve, and a pipe connected to the hopper through which the mixture is transported from the hopper, by means of a gas flow or by gravity, to the printhead located separated from the feeding assembly. The printhead comprises a cyclone connected with the pipe, such that the mixture of materials and gas enters the cyclone, the mixture being separated from the gas and the mixture being extruded with an extrusion screw to an extrusion nozzle.

### DISCLOSURE OF THE INVENTION

The object of the invention is to provide a homogeneous material mixing device, a material extrusion printer comprising the homogeneous mixing device and an operating method for a homogeneous material mixing device as defined in the claims.

One aspect of the invention relates to the homogeneous material mixing device adapted for a material extrusion printer comprising a cyclone and a cyclone connecting pipe to transport a mixture of a gas with particles of a first material to the cyclone, the cyclone being configured to separate the gas from the particles of the first material and deposit them at an outlet of the cyclone.

The cyclone connecting pipe transports to the cyclone gas or the mixture of gas with particles of the first material when the homogeneous mixing device is in operation. The mixing device comprises at least a second cyclone connecting pipe which transports gas or a mixture of the gas with particles of a second material to the cyclone when the homogeneous mixing device is in operation, and regulation means configured to continuously regulate the gas flow rate circulating through both cyclone connecting pipes. A constant total inflow rate in the cyclone through each cyclone connecting pipe with a predefined amount of particles of the corresponding material is ensured, the mixing of the first material and second material and the separation of the gas from the mixture of said first material and said second material, or the separation of the gas from the first material or second material being carried out in the cyclone.

The homogeneous material mixing device allows air percentages to be changed *in situ*, such that it is possible to vary the proportion of the components of the deposited material by changing *in situ* the physicochemical and mechanical characteristics of the extruded material, where perfectly functional parts can be gradually manufactured. The mixing device allows to obtain parts or portions of parts made from a single material and/or from mixtures of two or more materials, where the outlet of the materials may be variable, i.e., proportions may be varied as the material deposited by the cyclone is extracted, or it may be steady, wherein the proportion is static or constant. The cyclone enables a homogeneous mixing of the materials that separately enter said cyclone.

Another aspect of the invention relates to a material extrusion printer comprising the homogeneous mixing device. The printer is preferably a three-dimensional (3D) printing model.

Another aspect of the invention relates to an operating method for a homogeneous material mixing device comprising a cyclone with a plurality of inlets and an outlet, whereby the entry of gas or of a mixture of gas and particles of a material into the cyclone through each inlet is selectively regulated, and the gas flow rate is continuously regulated, ensuring a constant total inflow rate with a predefined amount of particles of the corresponding material in the cyclone through each inlet.

These and other advantages and features of the invention will become apparent in view of the figures and detailed description of the invention.

### DESCRIPTION OF THE DRAWINGS

Figure 1 shows a perspective view of an embodiment of a homogeneous material mixing device according to the invention.
Figure 2 shows a side view of the homogeneous material mixing device shown in Figure 1.
Figure 3 shows a front view of the homogeneous material mixing device shown in Figure 1.
Figure 4 shows a top view of the homogeneous material mixing device shown in Figure 1.
Figure 5 shows another perspective view of the homogeneous material mixing device shown in Figure 1.
Figure 6 shows details A and B of the homogeneous material mixing device shown in Figure 1.

### DETAILED DISCLOSURE OF THE INVENTION

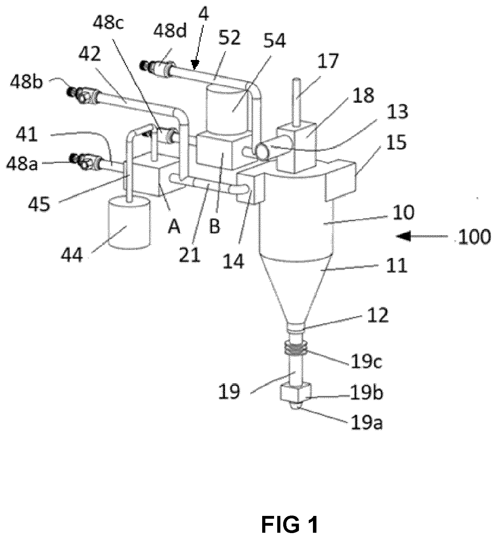

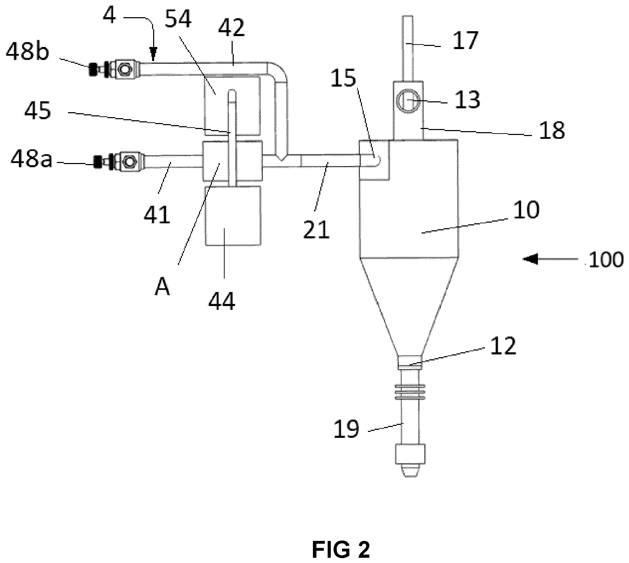

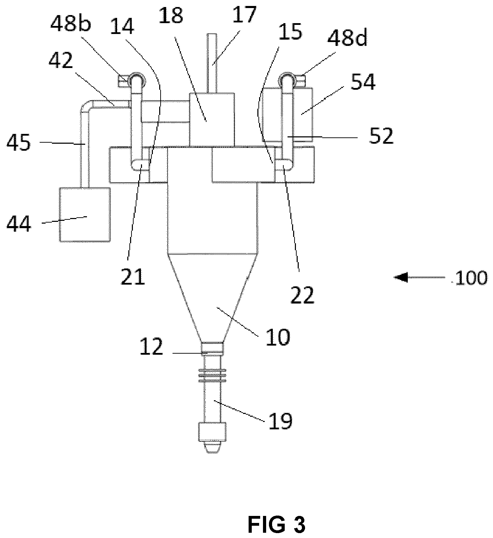

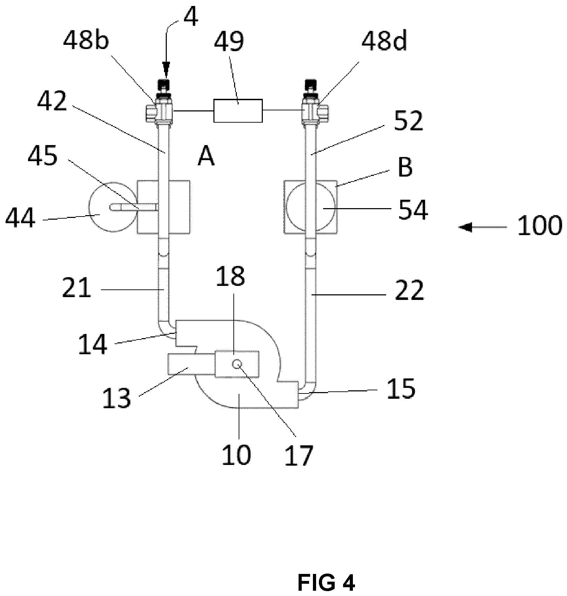

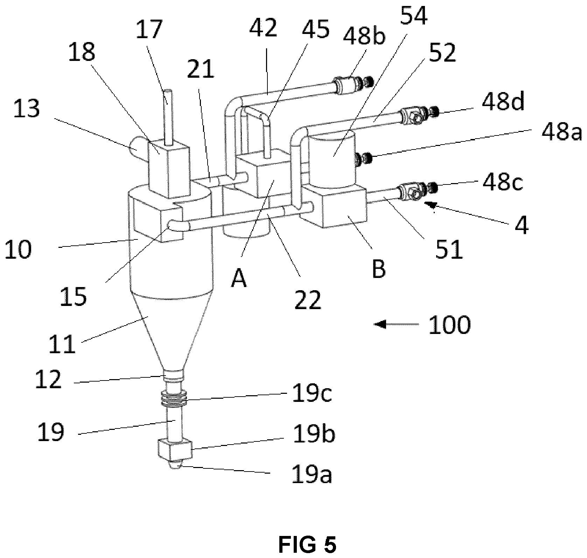

Figures 1 to 6 show an embodiment of a homogeneous material mixing device 100 according to the invention comprising a cyclone 10, a first cyclone connecting pipe 21 which transports gas or a mixture of gas with particles of a first material to the cyclone 10 when the homogeneous mixing device 100 is in operation, a second cyclone connecting pipe 22 which transports gas or a mixture of the gas with particles of a second material to the cyclone 10 when the homogeneous mixing device 100 is in operation, and regulation means 4 configured to continuously regulate the gas flow rate circulating through both cyclone connecting pipes 21 and 22 ensuring a constant total inflow rate in the cyclone 10 through each cyclone connecting pipe 21 and 22 with a predefined amount of particles of the corresponding material. The mixing of the first material and second material and the separation of the gas from the mixture of said first material and said second material, or the separation of the gas from the first material or second material are carried out in the cyclone 10. Constant total inflow rate in the cyclone through each connecting pipe must be understood to mean the total gas flow rate or total flow rate of the mixture of gas with particles of the corresponding material circulating through the respective cyclone connecting pipe and entering the cyclone.

The particles of the first material or of the second material can be in powder, granule or pellet form. The cyclone 10 is preferably a high-efficiency cyclone separator. The regulation means allow the load of particles introduced in the respective cyclone connecting pipe 21 and 22 to be controlled.

The homogeneous mixing device 100 comprises a first main gas pipe 41 communicated with the first cyclone connecting pipe 21, and a particle inlet 46a for particles of the first material communicated with the first cyclone connecting pipe 21, the regulation means 4 comprising a solenoid valve 48a in the first main gas pipe 41 configured to regulate a gas flow rate which ensures the entry of the amount of particles of the first material defined for each instant. The particle inlet 46a is connected with a first tank 44 housing the first material.

The regulation means 4 further comprise a first secondary gas pipe 42 connected with the first cyclone connecting pipe 21 and a solenoid valve 48b in the first secondary gas pipe 42 configured to regulate the gas flow rate in the first secondary gas pipe 42 which ensures the constant inflow rate in the cyclone 10 through the first cyclone connecting pipe 21. The solenoid valves 48a and 48b of the main gas pipe 41 and of the secondary gas pipe 42 are linked such that the increases and/or decreases in air flow rate between both balance out. The regulation means 4 comprise a control 49 which regulates the solenoid valves 48a and 48b, with the flow rate circulating through the first main gas pipe 41 and through the first secondary gas pipe 42 offsetting one another, keeping their sum at a steady and constant value.

Similarly, the homogeneous mixing device 100 comprises a second main gas pipe 51 communicated with the second cyclone connecting pipe 22, the regulation means 4 comprising a solenoid valve 48c in the second main gas pipe 51 configured to regulate a gas flow rate which ensures at each instant the inlet of the amount of particles of the second material defined for each instant. The particle inlet 56a is connected with the second tank 54 housing the second material. The regulation means 4 further comprise a second secondary gas pipe 52 connected with the second cyclone connecting pipe 22 and a solenoid valve 48d in the second secondary gas pipe 52 configured to regulate the gas flow rate in the second secondary gas pipe 52 which ensures the constant inflow rate in the cyclone 10 through the second cyclone connecting pipe 22. As described in the preceding paragraph, the solenoid valves 48c and 48d of the second main gas pipe 51 and of the second secondary gas pipe 52 are linked such that the increases and/or decreases in air flow rate between both balance out. The control 49 of the regulation means 4 also regulates the solenoid valves 48c and 48d, the flow rate circulating through the second main gas pipe 51 and through the second secondary gas pipe 52 offsetting one another, keeping their sum at a steady and constant value.

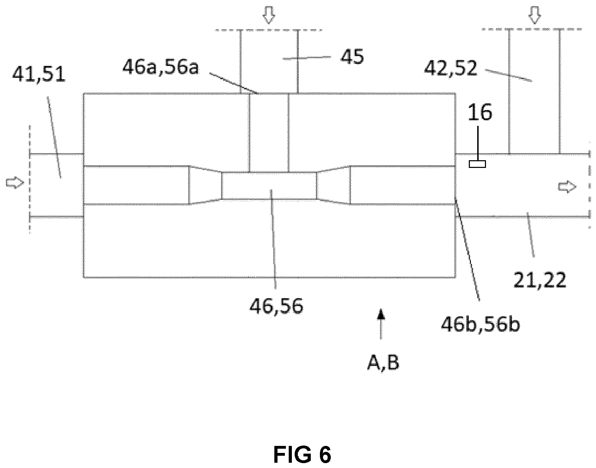

In the embodiment shown in the figures, in particular Figure 6 shows in detail the connection of each main gas pipe 41 and 51 with the particle inlet 46a and 56a for particles of the corresponding material through a respective Venturi tube 46 and 56, i.e., the supply of the corresponding material is by means of the vacuum suction principle in physics, which is a clean and simple solution, minimizing energy consumption. In particular, the connection of the first main gas pipe 41 with the particle inlet 46a for particles of the first material is by means of the first Venturi tube 46, while the connection of the second main gas pipe 51 with the particle inlet 56a for particles of the second material is by means of a Venturi tube 56. The outlet 46b of the first Venturi tube 46 is connected to the first cyclone connecting pipe 21 and the outlet 56b of the second Venturi tube 56 is connected to the second cyclone connecting pipe 22.

The supply of the first material to the first cyclone connecting pipe 21 or of the second material to the second cyclone connecting pipe 22 can be regulated by suitably sizing the diameter of the corresponding Venturi tube 46 and 56, in addition to regulating the gas inflow rate through the corresponding main gas pipe 41 and 51 through the regulation means 4.

The gas circulating through the homogeneous mixing device 100 is preferably air, in particular clean air.

In the embodiment shown in Figures 1 to 6, the first secondary gas pipe 42 is connected to the first cyclone connecting pipe 21 downstream of the connection of the first main gas pipe 41 with the particle inlet 46a, in particular it is connected downstream of the outlet 46b of the first Venturi tube 46. The second secondary gas pipe 52 is also connected to the second cyclone connecting pipe 22 downstream of the connection of the second main gas pipe 51 with the particle inlet 56a, in particular it is connected downstream of the outlet 56b of the second Venturi tube 56.

In other non-depicted embodiments, as an alternative to the feed by means of a Venturi tube, i.e., by vacuum, a gravity feeding device can be used, and said device allows the range of raw materials to be used to be expanded. Said gravity feeding device may optionally include an additional device to keep the supply of material constant as said material is consumed in the corresponding tank or hopper. Given that the feeding of each material is independently regulated, both (vacuum and gravity) devices can be used interchangeably for the mixing device, with the material to be used being the material which determines the best alternative.

In the embodiment shown in Figures, the homogeneous mixing device 100 comprises at least one flow rate sensor 16 in each cyclone connecting pipe 21 and 22. In particular, the flow rate sensor 16 is arranged upstream of the connection of the respective secondary gas pipe 42 and 52 with the respective cyclone connecting pipe 21 and 22. That is, a first flow rate sensor 16 is arranged upstream of the connection of the first secondary gas pipe 42 with the first cyclone connecting pipe 21, in particular between the outlet 46b of the first Venturi 46 and the connection of the first secondary gas pipe 42 with the first cyclone connecting pipe 21. A second flow rate sensor 16 is also arranged upstream of the connection of the second secondary gas pipe 52 with the second cyclone connecting pipe 22, in particular between the outlet 56b of the second Venturi 56 and the connection of the second secondary gas pipe 52 with the second cyclone connecting pipe 22. The respective sensor 16 thereby measures the flow rate at the outlet of the respective Venturi tube 46 and 56, and the regulation means 4 regulate the solenoid valve 48b and 48d arranged in the respective secondary gas pipe 42 and 52 for the gas flow rate necessary for the total constant flow rate to circulate through the corresponding cyclone connecting pipe 21 and 22 to circulate through said corresponding secondary gas pipe 42 and 52.

In one embodiment, the homogeneous mixing device 100 comprises an auxiliary sensor 16' in each cyclone connecting pipe 21 and 22. Each auxiliary sensor 16' is preferably arranged in the connection of the respective connecting pipe 21 and 22 to the cyclone 10. It is thereby ensured that the inflow rate to the cyclone 10 is constant through each connecting pipe 21 and 22. It is furthermore possible to monitor the gas flow rate in order to show the data or to perform better control through the regulation means 4.

Moreover, the homogeneous mixing device 100 further comprises an extruder screw 17 housed inside a body 11 of the cyclone 10 and configured to drive each material or the mixture of materials towards the outlet 12 of the cyclone 10. In the embodiment shown in the figures, the extruder screw 17 goes through the cyclone 10 along its central axis. Furthermore, the homogeneous mixing device 100 comprises at an upper end of the cyclone 10 a motor 18 actuating the extruder screw 17.

The extruder screw 17 drives the material or the mixture of materials through the outlet 12, since the material or the mixture of materials is deposited in the lower portion of the body 11 of the cyclone 10. Said extruder screw 17 enables the material to exit in a controlled manner, and at a rate that depends on the rotation speed thereof. In particular, said extruder screw 17, located on the axis of the cyclone 10, rotates actuated by the motor 18 for controlling the material outflow, once said material is mixed. The regulation means 4 control the motor 18.

The cyclone 10 comprises a gas outlet 13 at the upper end. The outlet 12 of the cyclone 10 is preferably located at the lower end of the cyclone 10 and the gas outlet 13 is located at the upper end of the cyclone 10, such that the gases can be discharged at a location and in a direction which does not interfere with the mixing of the different materials and with the late exit for the application thereof.

The homogeneous mixing device 100 further comprises an extruder head 19 coupled at the outlet 12 of the cyclone 10 with an outlet nozzle 19a such that the corresponding material or the mixture of materials driven by the extruder screw 17 exits in a more controlled manner and oriented towards the point where it is to be deposited. In a preferred embodiment such as the one shown in the figures, the extruder head 19 further comprises a heating element 19b configured to heat the material or the mixture of materials passing through the extruder head 19 before exiting through the nozzle 19a, and a cooling element 19c arranged upstream of the heating element 19b and configured to prevent the inside of the body 11 of the cyclone 10 from heated up and, therefore, to prevent the material particles or mixture of materials from heating up before being deposited at the bottom of the body 11. In a preferred embodiment, the extruder screw 17 goes through the outlet 12 to the outlet nozzle 19a, regulating the material outflow in a more refined manner.

Another aspect of the invention relates to a material extrusion printer comprising the mixing device according to the invention.

The main gas pipes 41 and 51, the secondary gas pipes 42 and 52, and the cyclone connecting pipes 21 and 22 can be flexible or rigid. In the event that they were flexible, the movement of the mixing device without affecting the integrity of the entire assembly is facilitated. In particular, the material tanks would remain fixed, while the cyclone would move. In the event that they were rigid, the homogeneous mixing device is more robust, with said arrangement being oriented in a steady position, i.e., the homogeneous mixing device would not move.

The regulation means 4 are pneumatic regulation means and enable the pipes of the homogenous mixing device to be finer than what may sometimes be necessary to include with mechanical regulation means. Mechanical regulation means require pipes with a higher inertia, in which case moving a 3D printhead to which the homogeneous mixing device of the present invention is coupled is more difficult. The homogeneous mixing device according to the invention furthermore allows easier transport of the entire assembly since it is more lightweight. Furthermore, the regulation means 4 enable the entry of drier air, with a lower percentage of moisture, giving rise to a more homogeneous mixture. It is therefore possible to improve the conditions of the gas used for powder transport, for example, by means of drying, thus reducing the possibility of clumps in mixed powders, thereby achieving a more homogeneous mixture.

In the embodiment shown in the figures, the particles of the first material are stored in the first tank or hopper 44, connected with the first particle inlet 46a through a first particle feed pipe 45. The particles of the second material are stored in the second tank or hopper 54 communicated with the second particle inlet 56a through a second feed pipe not depicted in the figures. Preferably, the first tank 44 is arranged below the first particle inlet 46a, while the second tank 45 is arranged on the second particle inlet 56a. In other non-depicted embodiments, the tanks could be arranged interchangeably above or below the corresponding particle inlet.

In other non-depicted embodiments, the homogeneous material mixing device may comprise more than two cyclone connecting pipes through which other different materials can be introduced in the cyclone. Each connecting pipe would be communicated with the corresponding main gas pipe, with a particle inlet for particles of the corresponding material and with the corresponding secondary gas pipe, the regulation means operating as described. That is, what has been described for a mixing device with two cyclone connecting pipes can be extrapolated to a device with more than two cyclone connecting pipes.

Another aspect of the invention relates to a material extrusion printer comprising the homogeneous material mixing device 100 as described above.

Another aspect of the invention relates to an operating method for the mixing device 100 whereby the entry of gas or of a mixture of gas and particles of a material into a cyclone 10 through each inlet is selectively regulated, and the gas flow rate is continuously regulated, ensuring a constant total inflow rate with a predefined amount of particles of the corresponding material in the cyclone 10 through each inlet. The selective regulation is carried out at each inlet, through the first regulator, in this case the solenoid valves 48a and 48c, which regulate the gas flow rate and the particles of the corresponding material circulating through the respective cyclone connecting pipe 21 and 22 connected with the corresponding inlet of the cyclone 10 and a second regulator, in this case the solenoid valves 48b and 48d which act by regulating the gas flow rate circulating through the corresponding secondary pipe 42 and 52 communicated with the cyclone connecting pipe 21 and 22 with the sum of both flow rates being constant. The material particles entering the cyclone 10 through each inlet are made of different materials.

In an operating example of the mixing device 100 and, by extension, of the material extrusion printer (not depicted in the figures) for obtaining a final part made of different materials wherein a portion of the part is made of a first material, another portion of the part is made of a second material and another portion of the part is made of a mixture of both materials, the homogeneous mixing device 100 operates according to the following three steps to obtain the final part. In one example, the first material is blue colored, and the second material is yellow colored. In the first step, an entirely blue first portion of the final part is obtained; in the second step, a second portion of the part being green in color from a 50% mixture of both, blue and yellow, is obtained; and in the third step, an entirely yellow third portion of the final part is obtained.

In the first step, the regulation means 4 control the solenoid valve 48a associated with the first main gas pipe 41 to open the entire gas passage through the first main gas pipe 41, i.e., it allows the passage of 100% of the flow rate, while it keeps the solenoid valve 48b associated with the first secondary gas pipe 42 closed. Since the second material is not needed in this step, only gas circulates through the second cyclone connecting pipe 22, the solenoid valve 48d associated with the second secondary gas pipe 52 is opened to its maximum, allowing the entry of gas in the cyclone 10 through said second secondary gas pipe 52, while the solenoid valve 48c associated with the second main gas pipe 51 is kept closed to prevent the transport of the second material.

In the second step, both the first blue material and the second yellow material are provided in equal parts, achieving the desired green, for which purpose the respective solenoid valves 48a and 48c of the main gas pipes 41 and 51 opens to 50% so that the same amount of first material as second material can enter. However, to keep the total flow rate of each inlet to the cyclone 10 constant through each cyclone connecting pipe 21 and 22, 50% of the gas flow rate must circulate through the first secondary gas pipe 42 and through the second secondary gas pipe 52, respectively, such that by means of the solenoid valves 48b and 48d respectively associated with the first secondary gas pipe 42 and the second secondary gas pipe 52, the passage of 50% of the gas flow rate is allowed, such that the total constant flow rate, i.e., 100% of the flow rate, enters the cyclone 10 through each cyclone connecting pipe 21 and 22.

The third step is the reverse of step 1, the third portion of the part is made only of the second yellow material. To that end, the solenoid valve 48c associated with the second main gas pipe 51 is regulated to feed 100% of the inlet to the cyclone 10 through the second mixing pipe 22, leaving the solenoid valve 48d associated with the second secondary gas pipe 52 closed, and the solenoid valve 48b associated with the first secondary gas pipe 42 is opened to its maximum, allowing the entry of only gas in the cyclone 10 through said first secondary gas pipe 42 while the solenoid valve 48a associated with the first main gas pipe 41 is kept closed to prevent the transport of the first material.

In the operating example of the described printer, to obtain a total constant flow rate of 100% through the first cyclone connecting pipe 21, the gas flow or gas flow rate through the first main gas pipe 41 would follow the sequence of 100%, 50% and 0%, while the gas flow or gas flow rate through the first secondary gas pipe 42 would accordingly follow the sequence of 0%, 50% and 100%. Similarly, the gas flow or gas flow rate through the second main gas pipe 51 would follow the sequence of 0%, 50% and 100%, while the gas flow or gas flow rate through the second secondary gas pipe 52 would accordingly follow the sequence of 100%, 50% and 0%.

## Claims

1. Homogeneous material mixing device adapted for a material extrusion printer comprising a cyclone (10) and a cyclone connecting pipe (21) to transport a mixture of a gas with particles of a first material to the cyclone (10), the cyclone (10) being configured to separate the gas from the particles of the first material and deposit them at an outlet (12) of the cyclone (10), **characterized in that** the cyclone connecting pipe (21) transports to the cyclone (10) gas or the mixture of gas with particles of the first material when the homogeneous mixing device (100) is in operation, and **in that** it comprises at least a second cyclone connecting pipe (22) which transports gas or a mixture of the gas with particles of a second material to the cyclone (10) when the homogeneous mixing device (100) is in operation, and regulation means (4) configured to continuously regulate the gas flow rate circulating through both cyclone connecting pipes (21,22) ensuring a constant total inflow rate in the cyclone (10) through each cyclone connecting pipe (21,22) with a predefined amount of particles of the corresponding material, the mixing of the first material and the second material and the separation of the gas from the mixture of said first material and said second material, or the separation of the gas from the first material or the second material, being carried out in the cyclone (10).

2. Homogeneous material mixing device according to the preceding claim, comprising a main gas pipe (41,51) and a particle inlet (46a, 56a) for particles of one of the materials, both communicated with each cyclone connecting pipe (21,22), the regulation means (4) comprising a secondary gas pipe (42,52) connected with each cyclone connecting pipe (21,22) and a solenoid valve (48b,48d) in each secondary gas pipe (42,52) configured to regulate the gas flow rate in each secondary gas pipe (42,52) which ensures the constant inflow rate in the cyclone (10) through each cyclone connecting pipe (21,22).

3. Homogeneous material mixing device according to the preceding claim, wherein the connection of each main gas pipe (41,51) with the particle inlet (46a,56a) for particles of the corresponding material is by means of a respective Venturi tube (46,56).

4. Homogeneous material mixing device according to the preceding claim, wherein an outlet (46b,56b) of each Venturi tube (46,56) is connected to the cyclone connecting pipe (21,22).

5. Homogeneous material mixing device according to any of claims 2 to 4, wherein each secondary gas pipe (42,52) is connected to the cyclone connecting pipe (21,22) downstream of the connection of the respective main gas pipe (41,51) with the respective particle inlet (46a,56a).

6. Homogeneous material mixing device according to any of claims 2 to 5, wherein the regulation means (4) comprise a solenoid valve (48a,48c) in each main gas pipe (41,51) configured to regulate a gas flow rate which ensures at each instant the inlet of the amount of particles of the first material and/or of the second material.

7. Homogeneous material mixing device according to any of claims 2 to 6, comprising at least one flow rate sensor (16) in each cyclone connecting pipe (21,22), the flow rate sensor (16) being arranged upstream of the connection of the respective secondary gas pipe (42,52) with the respective cyclone connecting pipe (21,22).

8. Homogeneous material mixing device according to the preceding claim, comprising an auxiliary flow rate sensor (16') in each cyclone connecting pipe (21,22), the auxiliary sensor (16') being arranged in the connection of the respective cyclone connecting pipe (21,22) to the cyclone (10).

9. Homogeneous material mixing device according to any of the preceding claims, wherein the cyclone (10) comprises an extruder screw (17) housed inside a body (11) of the cyclone (10) and configured to drive the mixture of materials to the outlet (12) of the cyclone (10).

10. Homogeneous material mixing device according to the preceding claim, comprising an extruder head (19) located at the outlet (12) of the cyclone (10), the extruder head (19) comprising an outlet nozzle (19a) for the mixed material.

11. Homogeneous material mixing device according to any of the preceding claims, comprising at least one additional connecting pipe to the cyclone (10).

12. Material extrusion printer comprising the homogeneous material mixing device according to any of the preceding claims.

13. Operating method for a homogeneous material mixing device (100) comprising a cyclone (10) with a plurality of inlets and an outlet (12), **characterized in that** the entry of gas or of a mixture of gas and particles of a material to the cyclone (10) through each inlet is selectively regulated, and the gas flow rate is continuously regulated, ensuring a constant total inflow rate with a predefined amount of particles of the corresponding material in the cyclone (10) through each inlet.

14. Operating method for the homogeneous material mixing device (100) according to the preceding claim, wherein the selective regulation is carried out at each inlet through a first regulator (48a, 48c) which regulates the gas flow rate and the particles of the corresponding material circulating through a cyclone connecting pipe (21,22) connected with the corresponding inlet of the cyclone (10), and a second regulator (48b, 48d) which acts by regulating the gas flow rate circulating through a secondary pipe (42,52) communicated with the cyclone connecting pipe (21,22) with the sum of both flow rates being constant.

15. Operating method for the homogeneous material mixing device (100) according to claims 13 or 14, wherein the material particles entering the cyclone (10) through each inlet are made of different materials.
